# EUROPEAN PATENT APPLICATION

(11) **EP 4 703 167 A1**
(43) Date of publication of application: **04.03.2026**
(21) Application number: 25197852.4
(22) Date of filing: 25.08.2025
(51) Int. Cl.: B60J 7/22

(54) **ROAD CAR WITH SUNROOF AND FLOW DEFLECTOR**

(30) Priority: 29.08.2024 IT 202400019402
(71) Applicant: FERRARI S.p.A., 41100 Modena (IT)
(72) Inventor: DE PAOLI, Alessandro Paolo, 41100 MODENA (IT); BALLATORE, Marco, 41100 MODENA (IT); SANCHEZ GOMEZ, Isaac Joaquin, 41100 MODENA (IT)
(74) Representative: Studio Torta S.p.A.

(57) **Abstract**

A road vehicle is provided with a passenger compartment (4) that is delimited by a front windshield (11) inserted in a support ring (12) and a sunroof (15), which can be coupled to an upper cross member (14) of the support ring (12), and a covering band (17), which extends along at least part of the upper cross member (14), and has a fixed portion (18; 32) fixed on the upper cross member (14) and at least one movable portion (19; 33) configured to move, relative to the fixed portion (18; 32) and under the thrust of a pneumatic or electric operating device (21; 34; 27; 35), between a lowered position and a lifted position, wherein the movable portion (19; 33) is inclined upwards relative to the fixed portion (18; 32) to deflect the air flow flowing along the front windshield (11) out of the passenger compartment (4) while the road vehicle is being driven.

## Description

### CROSS-REFERENCE TO RELATED APPLICATIONS

This patent application claims priority from Italian patent application no. 102024000019402 filed on August 29, 2024, the entire disclosure of which is incorporated herein by reference.

### TECHNICAL FIELD

This invention relates to a road vehicle.

### BACKGROUND

In particular, this invention relates to a road vehicle of the type comprising a support frame defining at least part of a lower floor of the road vehicle; and a passenger compartment, which projects upwards from the lower floor, and accommodates at least one pair of seats within it.

The passenger compartment is delimited by a front windshield mounted inside a support ring with a pair of side pillars connected by an upper cross member, and is also delimited by a sunroof configured to be attached to the upper cross member of the support ring.

The road vehicle also comprises a flow deviator to divert the flow of air fed along the front windshield outside the passenger compartment while the road vehicle is in motion.

Generally, the flow deviator comprises either a fixed spoiler projecting upwards from the upper cross-member or a movable spoiler configured to move, relative to the passenger compartment and under the thrust of an actuating device, between a lifted position, in which the spoiler projects upwards from the upper cross-member, and a lowered position.

Known road vehicles of the type described above have a number of drawbacks, mainly stemming from the fact that the fixed spoiler projects upwards from the upper cross-member even when the sunroof is closed, and that the operating device for the movable spoiler is relatively complex and expensive.

### SUMMARY

The object of this invention is to provide a road vehicle that overcomes the drawbacks described above and that is simple and inexpensive to manufacture.

According to this invention, a road vehicle is provided as set forth in the appended claims.

### BRIEF DESCRIPTION OF THE DRAWINGS

This invention will now be described with reference to the accompanying drawings, which illustrate a non-limiting embodiment thereof, wherein:
Figure 1 is a schematic perspective view, with parts removed for clarity, of a preferred embodiment of the road vehicle of this invention;
Figures 2 and 3 are two schematic side views, with parts shown in cross-section and parts removed for clarity, of a detail of the road vehicle in Figure 1 shown in two different operating positions;
Figures 4 and 5 are two schematic side views, with parts shown in cross-section and parts removed for clarity, of a first variant of the detail in Figures 2 and 3 shown in two different operating positions;
Figures 6 and 7 are two schematic side views, with parts shown in cross-section and parts removed for clarity, of a second variant of the detail in Figures 2 and 3 shown in two different operating positions; and
Figures 8 and 9 are two schematic side views, with parts shown in cross-section and parts removed clarity, of a third variant of the detail in Figures 2 and 3 shown in two different operating positions.

### DESCRIPTION OF EMBODIMENTS

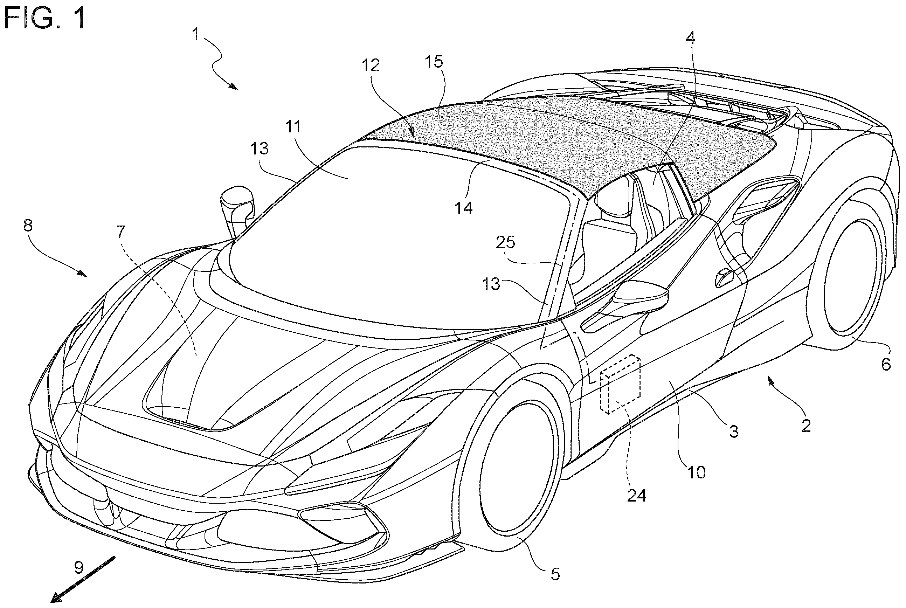

With reference to Figure 1, reference number 1 denotes, as a whole, a road vehicle comprising a support frame 2 defining at least part of a lower floor 3 of the car 1; a passenger compartment 4, which is mounted on the frame 2, and projects upwards from the floor 3; a front axle provided with two front wheels 5; and a rear axle provided with two rear wheels 6.

The vehicle 1 also comprises a known engine 7, in this case an internal combustion engine, which is mounted, in this case, in a front area 8 of the frame 2, and is connected with the front wheels 5 to move the vehicle 1 in a forward direction 9.

The passenger compartment 4 is provided with two doors 10 for access, and is delimited by a front windshield 11 mounted within a support ring 12 comprising two side pillars 13 connected by an upper cross member 14.

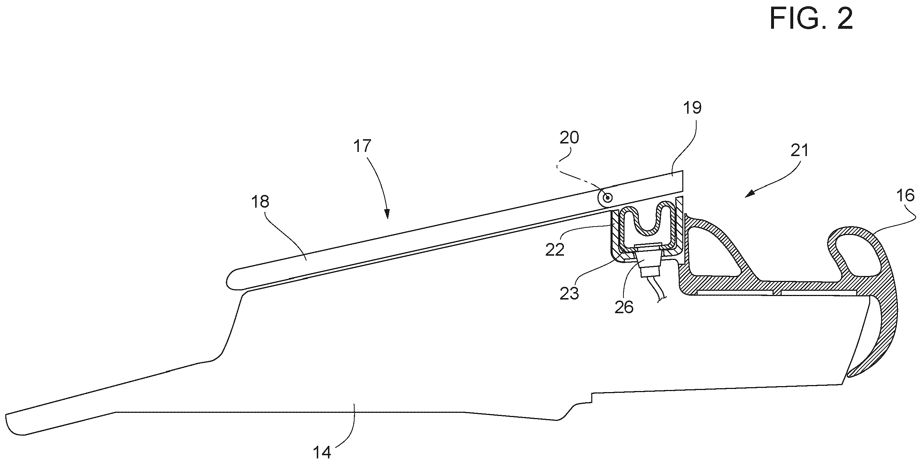

The passenger compartment 4 is closed by a sunroof 15 movable between an open position (not shown) and a closed position (Figure 1), in which the roof 15 is coupled in a fluid-tight manner to the cross-member 14 via the interposition of a gasket 16 (Figure 2).

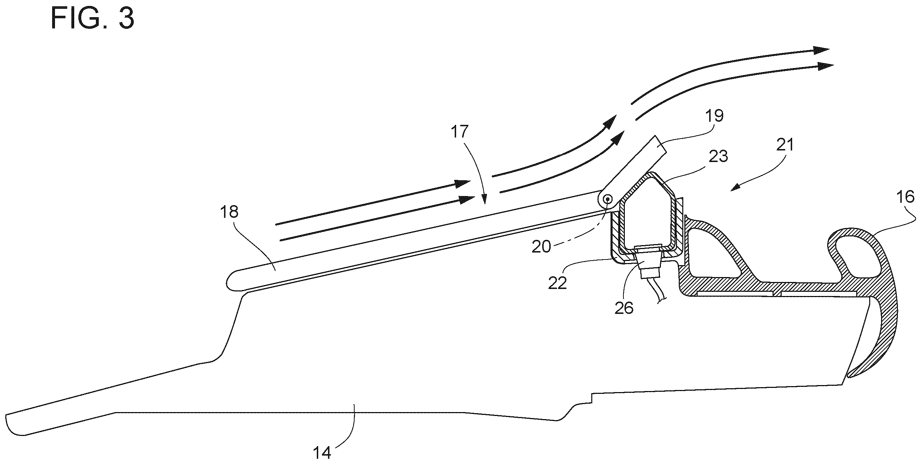

According to what is shown in Figures 2 and 3, the passenger compartment 4 is provided with a covering band 17, which extends along the cross member 14, and comprises a fixed portion 18 fixed on the cross member 14 and at least one movable portion 19 configured to move relative to the fixed portion 18 between a lowered position, in which the fixed portion 18 and the movable portion 19 are substantially coplanar with each other, and a lifted position, in which the movable portion 19 is inclined upwards relative to the fixed portion 18 to deflect the flow of air fed along the windshield 11 outside the passenger compartment 4 while the vehicle 1 is in motion.

Obviously, the movable portion 19 is moved into its lifted position when the roof 15 is open.

In this case, the movable portion 19 is hinged to the fixed portion 18 to rotate, with respect to the fixed portion 18, about a fulcrum axis 20 substantially transverse to the direction 9.

The portion 19 is moved around the axis 20 between its lowered position and its lifted position by a pneumatic operating device 21 comprising a retaining profile 22, which extends along at least the cross member 14, is made of metal, and is substantially U-shaped with a concavity facing upwards.

Obviously, according to a variant not shown, the profile 22 can be made of other materials than metal and/or be integrated into, and consist of a single piece with, the cross-member 14.

The profile 22 houses an inflatable tubular element 23, which is axially closed at its ends and is connected with a pneumatic feeding device 24, in this case an electrically driven pump, through the interposition of a pneumatic circuit 25.

The circuit 25 extends along at least part of the ring 12, and is connected to the element 23 via the interposition of an inflation valve 26.

The device 24 and the valve 26 are configured to inflate the element 23 to a final configuration (Figure 3), wherein the element 23 projects upwards from the cross member 14 and the profile 22 to move the movable portion 19 to its lifted position, and to deflate the element 23 into an initial configuration (Figure 2), wherein the element 23 is substantially folded within the profile 22 and the cross member 14 to move the movable portion 19 into its lowered position.

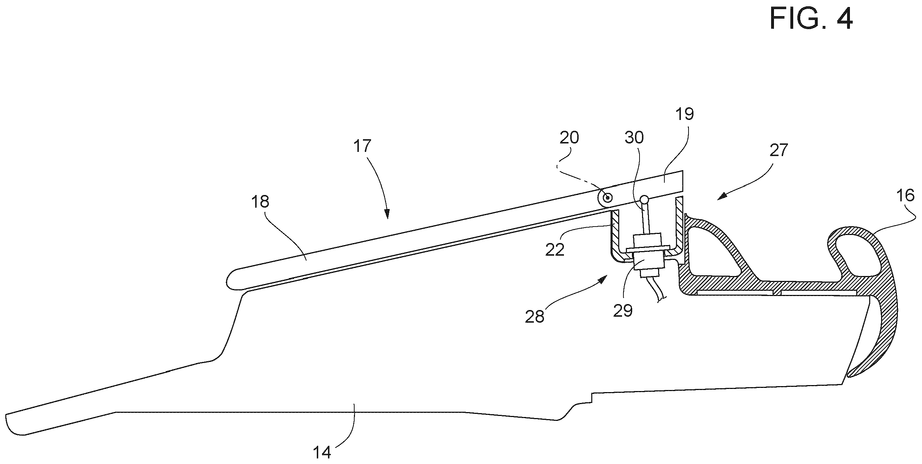

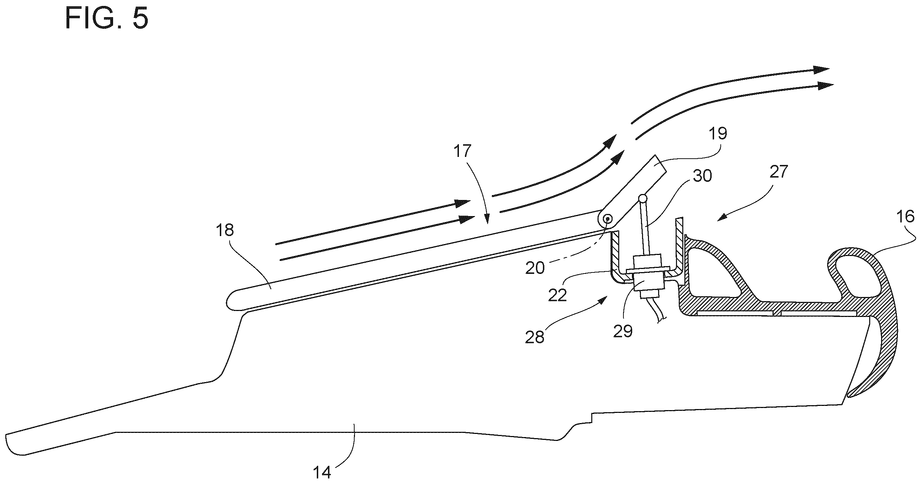

The variant shown in Figures 4 and 5 differs from the previous figures only in that, in it, the pneumatic operating device 21 is eliminated and replaced by an electric operating device 27 comprising a linear actuator 28.

The actuator 28 comprises an electric motor 29, which is fixed to the cross-member 14, and is provided with an output shaft (not shown) coupled via a screw-nut coupling to a transmission rod 30 that has a free end hinged to the movable portion 19.

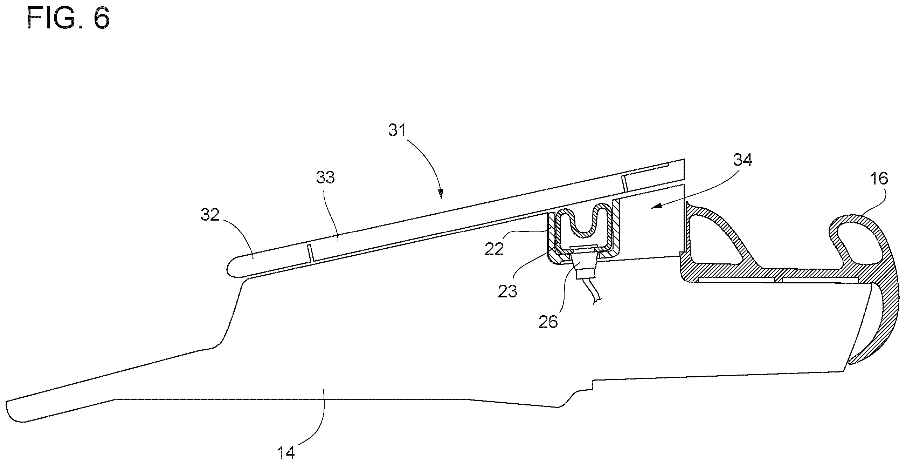

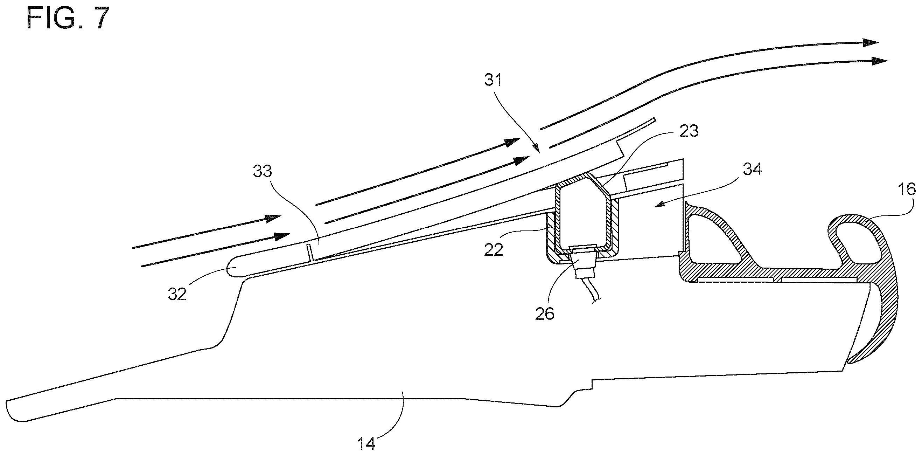

The variant shown in Figures 6 and 7 differs from that shown in Figures 2 and 3 only in that, in it, the covering band 17 is eliminated and replaced with a covering band 31 made of flexible, elastically deformable material.

The band 31 extends along the cross member 14, and comprises a fixed portion 32 fixed to the cross member 14 and at least one movable portion 33, which consists of a single piece with the fixed portion 32, and is configured to move relative to the fixed portion 32 between a lowered position, in which the fixed portion 32 and the movable portion 33 are substantially coplanar with each other, and a lifted position, in which the movable portion 33 is inclined upwards with respect to the fixed portion 32 in order to deflect the flow of air fed along the windshield 11 outside the passenger compartment 4 while the vehicle 1 is in motion.

Obviously, the movable portion 33 is moved into its lifted position when the roof 15 is open.

The movable portion 33 is elastically deformed between its lowered and lifted positions by a pneumatic operating device 34 that is completely equivalent to the other pneumatic operating device 21.

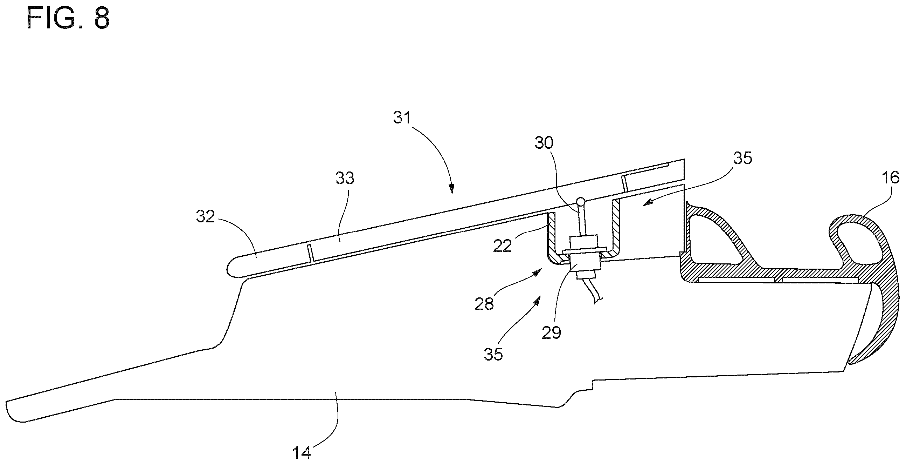

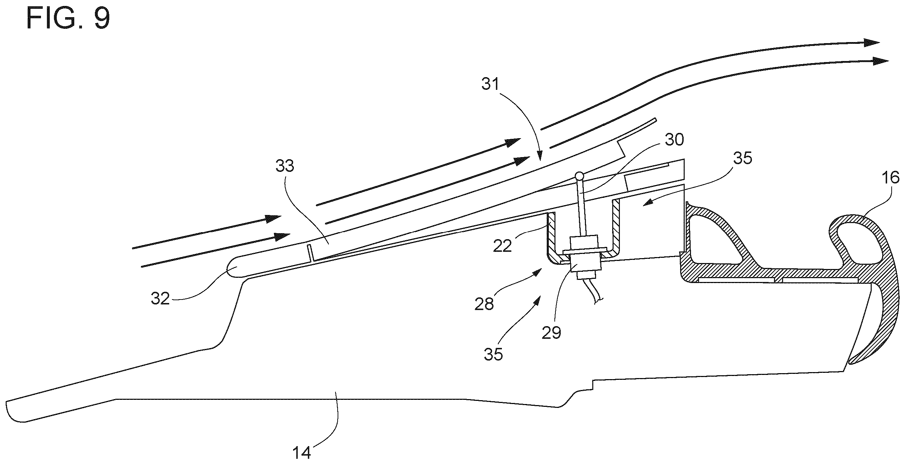

The variant shown in Figures 8 and 9 differs from that shown in Figures 6 and 7 only in that, in it, the pneumatic operating device 34 is replaced by an electric operating device 35 that is completely equivalent to the other electric operating device 27.

The pneumatic operating devices 21, 34 and the electric operating devices 27, 35 allow the lifted positions of the movable portions 19, 33 to be selectively controlled, for example as a function of the speed of the vehicle 1, and, thus, the aerodynamic behaviour of the vehicle 1 to be selectively controlled.

In addition, when arranged in their lowered positions, the movable portions 19, 33 are substantially coplanar to the fixed portions 18, 32 and do not compromise the aesthetic appearance of the vehicle 1.

According to a variant not shown, the covering bands 17, 31 comprise multiple movable portions 19, 33 distributed along the fixed portions 18, 32 between the side pillars 13.

## Claims

1. A road vehicle comprising a support frame (2); a passenger compartment (4), which projects upwards from the support frame (2), is delimited by a front windshield (11) inserted in a support ring (12) of the support frame (2) and is further delimited by a sunroof (15), which can be coupled to an upper cross member (14) of the support ring (12); and a covering band (17) extending along at least part of the upper cross member (14); and **characterized in that** the covering band (17) comprises a fixed portion (18; 32) fixed on the upper cross member (14) and at least one movable portion (19; 33) configured to move relative to the fixed portion (18; 32) between a lowered position and a lifted position, in which the movable portion (19; 33) is inclined upwards relative to the fixed portion (18; 32) so as to deflect the air flow flowing along the front windshield (11) out of the passenger compartment (4) while the road car is being driven; a pneumatic or electric operating device (21; 34; 27; 35) being provided to move the movable portion (19; 33) relative to the fixed portion (18; 32) between said lowered and lifted positions.

2. The road car according to claim 1, wherein, when the movable portion (19; 33) is in its lowered position, the fixed portion (18; 32) and the movable portion (19; 33) are substantially coplanar to one another.

3. The road car according to claim 1 or 2, wherein the fixed portion (18) and the movable portion (19) are coupled to one another in a rotary manner so as to allow the movable portion (19) to rotate, relative to the fixed portion (18), around a fulcrum axis (20).

4. The road car according to claim 1 or 2, wherein the covering band (17) is made of an elastically deformable, flexible material and the fixed portion (32) and the movable portion (33) are manufactured as one single piece.

5. The road car according to any one of the preceding claims, wherein the fixed portion (18; 32) extends between two side pillars (13) of the support ring (12).

6. The road car according to any one of the preceding claims, wherein the movable portion (19; 33) extends between two side pillars (13) of the support ring (12).

7. The road car according to any one of the claims from 1 to 5, wherein the covering band (17) comprises a plurality of movable portions (19; 33) distributed along the fixed portion (18; 32) and configured to move relative to the fixed portion (18; 32) between said lowered and lifted positions.

8. The road car according to claim 7 and further comprising, for each movable portion (19; 33), a respective pneumatic or electric operating device (21; 34; 27; 35) to move the movable portion (19; 33) relative to the fixed portion (18; 32) .

9. The road car according to any one of the preceding claims, wherein the pneumatic operating device (21; 34) comprises at least one inflatable tubular element (23) mounted along the upper cross member (14) and a pneumatic feeding device (24) configured to inflate the tubular element (23) to a final configuration, in which the tubular element (23) pushes the movable portion (19; 33) of the covering band (17) to its lifted position, and to deflate the tubular element (23) to an initial configuration, in which the tubular element (23) allows the movable portion (19; 33) of the covering band (17) to move to its lowered position.

10. The road car according to any one of the preceding claims, wherein the electric operating device (27; 35) comprises at least one linear actuator (28) comprising, in turn, an electric motor (29), which is mounted in the upper cross member (14), and a transmission rod (30), which is connected to the movable portion (19; 33) of the covering band (17) and is coupled to an output shaft of the electric motor (29).
